# EUROPÄISCHE PATENTANMELDUNG

(11) **EP 0 718 514 A2**
(43) Veröffentlichungstag der Anmeldung: **26.06.1996**
(21) Anmeldenummer: 95119013.1
(22) Anmeldetag: 02.12.1995
(51) Int. Cl.: F16C 33/76, F04D 29/06

(54) **Lager- und Dichtungsanordnung**

(30) Priorität: 24.12.1994 DE 4446630
(71) Anmelder: KSB Aktiengesellschaft, D-67227 Frankenthal (DE)
(72) Erfinder: Urban, Jörg, D-67061 Ludwigshafen (DE)

(57) **Zusammenfassung**

Die Erfindung betrifft eine Lager- und Dichtungseinheit, wobei neben einer Dichtung ein Wälzlager angeordnet ist. Den Dichtungsspalt passierende Dampfmengen bewirken die Schmierung des Wälzlagers.

## Beschreibung

Die Erfindung betrifft eine Lager- und Dichtungsanordnung gemäß dem Oberbegriff des Anspruches 1.

Derartige Dichtungsanordnungen finden in unterschiedlicher Form häufig bei Kreiselpumpen Verwendung, bei denen eine die Laufräder antreibende Welle in der Nähe des mediumgefüllten Pumpengehäuses gelagert ist. Eine bekannte Lager- und Dichtungsanordnung zeigt die DE-A- 33 31 466. Bei dieser ist innerhalb eines Lagergehäuses eine Antriebswelle in Wälzlagern gelagert, wobei die Lagerschmierung durch eine Ölfüllung innerhalb des Lagergehäuses erfolgt. Zu diesem Zweck muß der Innenraum des Lagergehäuses gegenüber der Umgebung abgedichtet werden, damit das Schmieröl nicht austreten kann. An das pumpenseitige Wellenlager grenzt ein Druckdeckel eines Pumpengehäuses, der eine Wellendurchführung mit darin angeordneter Gleitringdichtung aufweist. Die Wellenlager und die Gleitringdichtung sind somit in zwei völlig voneinander getrennten Räumen untergebracht, die auch gegeneinander abgedichtet sind. In vergleichbarer Weise erfolgt eine solche Lagerung auch bei einer mehrstufigen Kreiselpumpe, wie sie beispielsweise durch die DE-C- 38 02 950 bekannt ist. Die die Welle tragenden Wälzlager sind hier in separaten Lagergehäusen angeordnet, wobei ein externer Schmierkreislauf die Funktionsfähigkeit der Wälzlager gewährleistet.

Bei Flüssigkeitspumpen zur Kühlung von Verbrennungskraftmaschinen in Kraftfahrzeugen, wie sie beispielsweise durch die DE-A- 37 42 085 bekannt sind, finden ebenfalls Wälzlager Verwendung. Diese sind hierbei so ausgebildet, daß die Kühlflüssigkeit des Verbrennungsmotors gleichzeitig auch zur Lagerschmierung der Pumpenwelle dient. Das Wälzlager ist also gewissermaßen innerhalb der Kreiselpumpe angeordnet und wird durch eine Art Bypass mit Fördermedium zur Schmierung und Kühlung beaufschlagt. Die Abdichtung nach außen übernimmt eine bekannte Gleitringdichtung. Bei diesen Pumpen ist es durch die DE-A- 37 16 028 auch bekannt, ein fettgeschmiertes Wälzlager Verwendung finden zu lassen. Der fettgefüllte Raum ist durch zwei Dichtungen gegenüber dem Pumpenraum und der Atmosphäre abgedichtet. Für Pumpen, die in höheren Temperaturbereichen Verwendung finden, sind derartige Lösungen nicht geeignet, da dann die Dichtungsmaterialien und Schmierstoffe Probleme bereiten würden. Infolge der notwendigen Kühlungsmaßnahmen muß dann der Bauaufwand vergrößert werden, was auch längere Wellen zur Folge hat.

Der Erfindung liegt das Problem zugrunde, eine Lageranordnung zu entwickeln, die bei geringen Reibungsverlusten einen Betrieb auch bei hohen Drehzahlen und in höheren Temperaturbereichen zuläßt sowie mit einem Minimum an Schmieraufwand betrieben werden kann. Die Lösung dieses Problems erfolgt mit den Merkmalen des Anspruches 1. Die Verwendung findende Dichtung wird hierbei so eingestellt, daß eine minimale Leckage die Dichtung passiert und als Schmierstoff den Wälzkörpern des Wälzlagers zugeführt wird. Selbstverständlich ist eine derartige Schmierung nur bei Medien zulässig, deren Zusammensetzung keine Gefährdung der Umgebung bedeutet.

Nach einer Ausgestaltung der Erfindung ist zwischen Dichtung und Lager eine mediumführende Verbindung angeordnet. Damit kann die geringe, aus einem Dichtspalt austretende Menge direkt dem Lager zugeführt werden. Als Dichtung können bekannte Dichtungsbauarten verwendet werden. Das Wälzlager kann unmittelbar neben der Dichtung, gewöhnlich einer Gleitringdichtung, in einem gemeinsamen Gehäuse eingesetzt werden. Bei der Abdichtung von flüssigkeitsgefüllten Räumen mittels Gleitringdichtungen bildet sich auf den aufeinanderreibenden Gleitflächen durch das abzusperrende Medium ein Schmierfilm aus. Die im Dichtungsspalt entstehende Reibungshitze ist dann ursächlich verantwortlich dafür, daß aus dem Dichtungsspalt abzusperrendes Medium ausdampft. Dieser Mediumdampf kann dann direkt zur Schmierung der Wälzlager benutzt werden. Als korrosionsbeständiges Wälzlager, das unter diesen Betriebsbedingungen eine hohe Standzeit aufzuweisen vermag, sind Wälzlager aus keramischen Werkstoffen besonders geeignet. Deren Betrieb mit Schmierung durch ein dampfförmiges Schmiermittel ist sicher, erhöht die Standzeit eines damit ausgerüsteten Aggregates und reduziert die Reibungsverluste auf ein Minimum.

Damit ist eine Erhöhung der Betriebsdrehzahlen möglich geworden, wodurch sich der Gesamtwirkungsgrad einer so gelagerten Kreiselpumpe steigern läßt. Bedingt durch das geringere spezifische Gewicht von keramischen Wälzkörpern ergibt sich gegenüber herkömmlichen Lagern und bei gleichen Drehzahlen eine geringere Belastung der Lagerringe durch Fliehkräfte. Dies erlaubt einen Betrieb bei höheren Umfangsgeschwindigkeiten. Als Lagerbauformen können hierbei die üblichen Wälzlagerformen Verwendung finden.

Zur Schonung der Lager vor äußeren Einflüssen sind diese unter Zwischenschaltung von elastischen Elementen am Gehäuse bzw. auf der Welle angeordnet. Damit lassen sich durch Temperatureinflüsse bedingte Dehnungen zwischen den Lagerringen und beispielsweise der Welle ausgleichen. Die erfindungsgemäße Konstruktion bietet darüber hinaus den Vorteil, daß die Baulänge einer damit ausgerüsteten Kreiselpumpe erheblich reduziert werden kann. Durch die in unmittelbarer Nähe einer Dichtung, z. B. einer Gleitringdichtung, angeordneten Wälzlager kann der Lagerabstand einer Pumpenwelle reduziert werden. Dies hat wiederum eine Verminderung der Wellendurchbiegung zur Folge. Bedingt durch die mit Hilfe der Wälzlager mögliche exakte radiale und axiale Führung ergibt sich auch ein bewegungsarmer Lauf einer eingesetzten Gleitringdichtung was zur Folge hat, daß deren Lebensdauer ebenfalls verbessert wird. Der Verzicht auf separate Schmierstoffe bzw. auf zusätzliche Schmierkreisläufe stellt eine gravierende Erleichterung beim Betrieb eines derartig gelagerten Aggregates dar. Hinzu kommt eine erhebliche Einsparung des Platzbedarfes sowie eine gesteigerte Servicefreundlichkeit. Im Vergleich zu einem in einem Medium rotierenden Lager besteht eine geringere Reibung. Somit ergibt sich eine Verbesserung des Gesamtwirkungsgrades einer erfindungsgemäß gestalteten Lagerung.

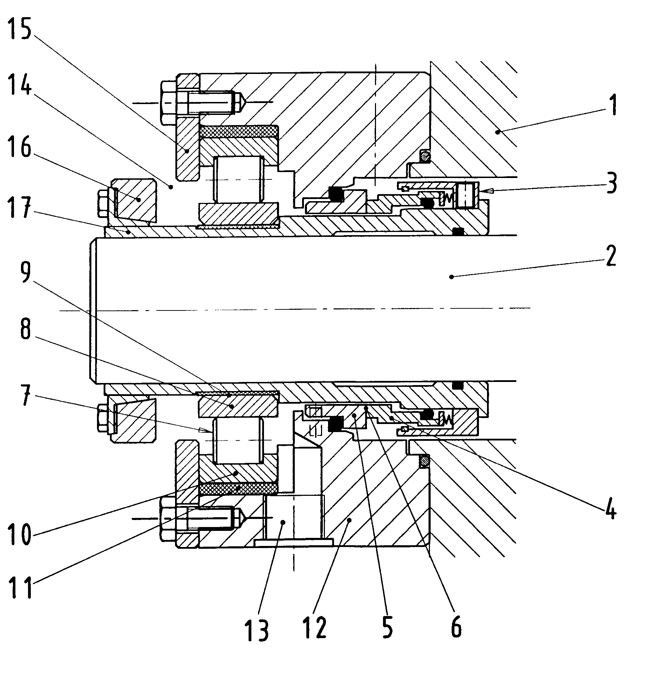

Ein Ausführungsbeispiel der Erfindung ist in der Zeichnung dargestellt und wird im folgenden näher beschrieben.

Ein Gehäuse 1, welches hier als Ausschnitt angedeutet ist, wird von einer Welle 2 durchdrungen. Innerhalb des Gehäuses 1 befindet sich ein Medium, welches durch eine Gleitringdichtung 3 am Austritt aus dem Gehäuse 1 gehindert wird. Die Gleitringdichtung 3 besteht hierbei aus einem mit der Welle 2 rotierenden Gleitring 4 und einem stationären Gleitring 5, wobei zwischen diesen beiden Gleitringen ein Dichtspalt 6 befindlich ist. In diesem Dichtspalt 6 dringt abzusperrendes Medium ein, welches durch die Reibungshitze im Dichtspalt verdampft. Dieser Dampf tritt aus dem Dichtspalt 6 aus und strömt einem hier in unmittelbarer Nähe der Gleitringdichtung 3 angeordneten Wälzlager 7 zu. Das hier atmosphärenseitig angeordnete Wälzlager 7 sitzt sehr dicht bei der Gleitringdichtung 3, um die im Dichtspalt 6 verdampfende Flüssigkeit als Schmiermittel direkt ausnutzen zu können. Ist dieses Wälzlager aus einer korrosionsbeständigen Keramik hergestellt, dann reichen diese geringen Dampfmengen völlig zur Schmierung der Wälzkörper des Wälzlager 7 aus. Die bei normalem Betrieb entstehenden geringen Dampfmengen kondensieren an den keramischen Lagerteilen. Die so entstehende geringe Schmierstoffmenge reicht bei derartigen Lagern aus, um einen zuverlässigen Betrieb zu gewährleisten.

Durch Temperatureinflüsse bedingte Ausdehnungen zwischen der Welle und dem Lagerinnenring 8 werden durch ein elastisches Element 9, z. B. eine geschlitzte Toleranzhülse, ausgeglichen. Dieses elastische Element verhindert, daß damit im Lagerring 8 Zugspannungen entstehen, die für eine Keramik zerstörend wirken können. Am Lageraußenring 10 dient ein elastisches Element 11 für eine schützende Zwischenlage.

Aufgrund ihrer kompakten Anordnung kann die Lager- und Dichtungseinheit in einem gemeinsamen Gehäuseteil 12 angeordnet werden. Je nach Art und Menge der den Dichtspalt 6 passierenden Flüssigkeits- bzw. Schmiermittelmenge, kann diese, wenn sie in größerer Menge anfällt, durch eine Leckagebohrung 13 abgeführt werden. Bei kleinen Mengen kann das Medium durch den Ringspalt 14 zwischen Lagerdeckel 15 und Halteelement 16 einer Wellenhülse 17 ausdampfen. Bei entsprechend konstruktivem Aufbau ist es ohne weiteres möglich, den Lagerdeckel 15 als eine geschlossene Platte auszubilden, die bei entsprechend kürzerer Welle und gekürztem Lagerinnenring 8 das Gehäuseteil 12 nach außen verschließt. Für die Wellenhülse 17 wäre dann eine entsprechend andere Fixierung vorzusehen. Das im Ausführungsbeispiel gezeigte Rollenlager kann durch jede andere bekannte Wälzlagerbauform ersetzt werden. Es kann also genauso gut ein Axial- und/oder Radiallager keramischer Bauart Verwendung finden, wobei die Form der Wälzlager den jeweiligen Lagerbedingungen anzupassen sind. Die Bauform ist hier nicht auf Gleitringdichtungen beschränkt, sondern kann ebenfalls andere Dichtungsbauarten beinhalten.

## Patentansprüche

1. Lager- und Dichtungsanordnung für eine Welle, wobei das Lager außerhalb eines von der Dichtung abgesperrten, mit Medium gefüllten Raumes angeordnet ist, **dadurch gekennzeichnet**, daß das Lager als korrosionsbeständiges Wälzlager (7) ausgebildet ist und daß aus einem Dichtungsspalt (6) einer Dichtung (3) austretendes Medium den Schmierstoff des Wälzlagers (7) bildet.

2. Lager- und Dichtungsanordnung nach Anspruch 1, dadurch gekennzeichnet, daß zwischen Dichtung (3) und Wälzlager (7) eine mediumführende Verbindung besteht.

3. Lager- und Dichtungsanordnung nach Anspruch 1 oder 2, dadurch gekennzeichnet, daß das korrosionsbeständige Wälzlager (7) neben der Dichtung (3) angeordnet ist.

4. Lager- und Dichtungsanordnung nach Anspruch 3, dadurch gekennzeichnet, daß Dichtung (3) und Wälzlager (7) innerhalb eines gemeinsamen Gehäuseteiles (12) angeordnet sind.

5. Lager- und Dichtungsanordnung nach einem der Ansprüche 1 bis 4, dadurch gekennzeichnet, daß die Dichtung (3) als Gleitringdichtung ausgebildet ist.

6. Lager- und Dichtungsanordnung nach einem der Ansprüche 1 bis 4, dadurch gekennzeichnet, daß das Wälzlager (7) als Keramiklager ausgebildet ist.

7. Lager- und Dichtungsanordnung nach Anspruch 5, dadurch gekennzeichnet, daß das Wälzlager (7) unter Zwischenschaltung elastischer Elemente (9, 11) auf einer Welle (2) und/oder in einem Gehäuse (12) gelagert ist.

8. Lager- und Dichtungsgehäuse nach einem der Ansprüche 1 bis 6, dadurch gekennzeichnet, daß das Lager- und Dichtungsgehäuse (12) keinen Wellendurchgang aufweist.
